(19) Europäisches Patentamt

European Patent Office

Office européen des brevets

(11) EP 4 741 797 A1

(12) **EUROPEAN PATENT APPLICATION**
published in accordance with Art. 153(4) EPC

(43) Date of publication:
13.05.2026 Bulletin 2026/20

(21) Application number: 24835140.5

(22) Date of filing: 15.05.2024

(51) International Patent Classification (IPC):
*G01N 9/00* (2006.01)

(52) Cooperative Patent Classification (CPC):
Y02E 60/10

(86) International application number:
PCT/CN2024/093435

(87) International publication number:
WO 2025/007655 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.07.2023 CN 202310810909

(71) Applicant: SVOLT Energy Technology Co., Ltd.
Changzhou, Jiangsu 213200 (CN)

(72) Inventors:
• JIAN, Jiejie
Changzhou, Jiangsu 213200 (CN)
• XU, Changsheng
Changzhou, Jiangsu 213200 (CN)
• CHENG, Xiaolin
Changzhou, Jiangsu 213200 (CN)
• LIU, Jing
Changzhou, Jiangsu 213200 (CN)
• SHENG, Jie
Changzhou, Jiangsu 213200 (CN)
• YANG, Hongxin
Changzhou, Jiangsu 213200 (CN)

(74) Representative: Michalski Hüttermann & Partner
Patentanwälte mbB
Kaistraße 16A
40221 Düsseldorf (DE)

(54) **POLE PIECE TESTING METHOD**

(57) The present application discloses a pole piece testing method. The method comprises: performing pre-processing of pole pieces to obtain a plurality of test samples; performing rolling on a test sample to obtain the compaction density of the test sample; obtaining the specific surface area of the test sample; calculating the specific surface area of an electrode active material; establishing, on the basis of the specific surface area and compaction density of the electrode active material, a compaction density-specific surface area curve; and obtaining, on the basis of an inflection point of the compaction density-specific surface area curve, a maximum available compaction density of the pole piece.

Preprocess the electrode sheet to obtain several test samples

↓

Roll the test samples to obtain compaction densities of the test samples

↓

Obtain specific surface areas of the test samples

↓

Calculate a specific surface area of an electrode active material

↓

Establish a compaction density-specific surface area curve according to specific surface areas of the electrode active material and the compaction densities

↓

Obtain a maximum usable compaction density of the electrode sheet according to an inflection point of the compaction density-specific surface area curve

**FIG. 1**

# EP 4 741 797 A1

**Description**

## CROSS-REFERENCE TO RELATED APPLICATION

The present application claims the priority to the Chinese Patent Application No. 202310810909.2 filed with the China National Intellectual Property Administration on July 3, 2023, and entitled "POLE PIECE TESTING METHOD", the contents of which are incorporated herein by reference in entirety.

## TECHNICAL FIELD

The embodiments of the present application relate to, but are not limited to, a method for testing an electrode sheet (pole piece).

## BACKGROUND ART

Positive and negative electrode sheets are key materials in lithium-ion batteries. During the manufacturing process of lithium batteries, the compaction density of the electrode sheet has a significant impact on the electrical performance. The compaction density is closely related to the specific capacity, efficiency, and internal resistance of the electrode sheet, as well as the cycle performance of the battery. A proper compaction density can increase the discharge capacity of the battery, reduce the internal resistance, decrease the polarization loss, and extend the cycle life of the battery. A proper compaction density of the electrode sheet can increase the discharge capacity of the battery, reduce the internal resistance, decrease the polarization loss, extend the cycle life of the battery, thereby improving the utilization rate of the lithium-ion battery. Excessively high or low compaction is detrimental to the battery performance. Therefore, it is very important to find the optimal compaction density for battery design.

## SUMMARY

The present application provides a method for testing an electrode sheet. The method includes following steps:

preprocessing the electrode sheets to obtain several test samples;
rolling the test samples to obtain compaction densities of the test samples;
obtaining specific surface areas of the test samples;
calculating a specific surface area $S_B$ of an electrode active material according to Formula (1):

$$S_B = S_A * (a+b)/b \quad \text{Formula (1);}$$

where in Formula (1), $S_A$ is a specific surface area of a test sample, a is an areal density of a current collector of the electrode sheet, and b is an areal density of the electrode active material of the electrode sheet;
establishing a compaction density-specific surface area curve according to specific surface areas of the electrode active material and the compaction densities; and
obtaining a maximum usable compaction density of the electrode sheet according to an inflection point of the compaction density-specific surface area curve.

In some embodiments, the step of obtaining the compaction densities of the test samples includes:

measuring thickness values of the rolled test samples; and
calculating a compaction density $\rho$ of the test sample according to Formula (2):

$$\rho = (a+b)/h \quad \text{Formula (2);}$$

where in Formula (2), h is a thickness of the test sample.

In some embodiments, a rolling load is in a range of 3 tons to 50 tons.
In some embodiments, the areal density a of the current collector of the electrode sheet satisfies: $3\,\text{mg/cm}^2 \leq a \leq 6\,\text{mg/cm}^2$.
The areal density b of the electrode active material of the electrode sheet satisfies: $10\,\text{mg/cm}^2 \leq b \leq 50\,\text{mg/cm}^2$. In some embodiments, the step of preprocessing the electrode sheet includes:

trimming off tabs and wrinkled edges of the electrode sheet; and

cutting the electrode sheet into 5 to 15 test samples of approximately same size.

In some embodiments, the step of establishing the compaction density-specific surface area curve according to the specific surface areas of the electrode active material and the compaction densities includes:

setting an X-axis according to compaction density data of the test samples;

setting a Y-axis according to specific surface area data of the electrode active material; and

generating a Cartesian coordinate system, and generating the compaction density-specific surface area curve in the Cartesian coordinate system according to a correspondence between a compaction density value of the test sample and a specific surface area value of the electrode active material.

In some embodiments, the step of obtaining the maximum usable compaction density of the electrode sheet according to the inflection point of the compaction density-specific surface area curve includes:

identifying the inflection point of the compaction density-specific surface area curve;

drawing tangent lines to curves respectively on two sides of the inflection point respectively, so that the two tangent lines intersect to form an intersection point; and

identifying an X-axis coordinate of the intersection point in the Cartesian coordinate system, so as to determine the maximum usable compaction density of the electrode sheet.

In some embodiments, a method for testing the specific surface area of the test sample is a nitrogen adsorption continuous flow method or a vacuum static volumetric method.

In some embodiments, the electrode sheet is a positive electrode sheet, the current collector of the electrode sheet is aluminum foil, and the electrode active material of the electrode sheet is at least one selected from the group consisting of $LiMnO_2$, $LiMn_2O_4$, $LiCoO_2$, $LiFePO_4$, $LiNi_xMn_{1-x}O_2$ and $LiNi_xCo_yMn_{1-x-y}O_2$, where $0 < x < 1$ and $0 < y < 1$.

In some embodiments, the electrode sheet is a negative electrode sheet, the current collector of the electrode sheet is copper foil, and the electrode active material of the electrode sheet is any one selected from the group consisting of graphite, soft carbon and hard carbon.

## BRIEF DESCRIPTION OF DRAWINGS

The technical solutions and other beneficial effects of the present application will be demonstrated below through the detailed description of the specific implementations of the present application with reference to the drawings.

FIG. 1 is a schematic flow chart of a method for testing an electrode sheet provided in an embodiment of the present application;

FIG. 2 is a schematic flow chart of a pretreatment process for an electrode sheet provided in an embodiment of the present application; and

FIG. 3 is a graph of a compaction density-specific surface area curve obtained from tests in an embodiment of the present application.

## DETAILED DESCRIPTION OF EMBODIMENTS

The technical solutions in the embodiments of the present application will be clearly and completely described below with reference to the drawings in the embodiments of the present application. Obviously, the described embodiments are only some of the embodiments of the present application, rather than all the embodiments. Based on the embodiments in the present application, all other embodiments obtained by those skilled in the art without inventive efforts shall fall within the protection scope of the present application.

In the existing related technologies, in the performance test of positive and negative electrode sheets, it is common to measure several thickness values of an entire electrode sheet and take an average value of all measured values as the thickness of the electrode sheet. Due to an uneven thickness of the electrode sheet, a compaction density directly calculated from the average value of the thickness has a large error. Alternatively, the compaction density is determined by testing different compaction-liquid absorption curves, but this method is greatly affected by ambient temperature and humidity, and is susceptible to interference from human factors, leading to misjudgment.

The following disclosure provides many different embodiments or examples for realizing different structures of the present application. To simplify the disclosure of the present application, the components and settings of specific examples are described below. Of course, they are merely examples and are not intended to limit the present application.

The embodiments of the present application provide a method for testing an electrode sheet. By testing the thicknesses of several test samples respectively to calculate compaction densities and form a data curve, an error caused by directly using an average value of thicknesses for calculation is avoided. Specific surface area data of the electrode sheet can be accurately measured by an instrument and equipment, with simple operation and stable and reliable results. By establishing a compaction density-specific surface area curve, a maximum usable compaction density of the electrode sheet is able to be obtained intuitively and accurately, which effectively avoids serious consequences such as misjudgment of material performance caused by human factors in liquid absorption test errors, thereby ensuring that a discharge capacity of a battery is able to be improved without sacrificing wetting and liquid retention performances of the electrode sheet.

When the compaction density of the electrode sheet is excessively low, a high porosity causes some particles to fall off during cycling and form an insulated state. These particles cannot participate in charge and discharge, resulting in low discharge specific capacity. In addition, a contact between an electrode coating and a current collector is poor, leading to large contact internal resistance and exchange impedance.

When the compaction density of the electrode sheet is excessively high, the extrusion degree between material particles is significant, and the porosity of the electrode sheet decreases. Consequently, the electrode sheet has a poor ability to absorb an electrolyte and is difficult to be wetted by the electrolyte. Electron conduction and ion conduction become mismatched, leading to the formation of dead lithium or lithium plating areas. This causes the specific capacity of the material to be insufficiently exerted, and also results in poor electrolyte retention capability of the battery; high polarization occurs during battery cycling, which further leads to severe capacity fading, a substantial increase in internal resistance, as well as poor rate performance and cycle performance.

Specific surface area refers to the surface area per unit mass of an electrode sheet material of a battery. It is usually used to describe an area of microstructures such as particles, pores and surface cracks in the material, and these structures are closely related to the transmission of protons, electrons and ions in the battery. The larger the specific surface area, the more microstructures in the electrode sheet of the battery, and the more contact surfaces with the electrode reaction, thereby improving the electrochemical reaction rate and activity of the electrode and enhancing the battery performance.

Generally, a higher specific surface area can improve battery performance. For example, in the battery, particles or nanostructures with a larger surface area can improve the surface reaction activity of the battery, increase electrochemical reactions, and improve the energy density and power density of the battery. In addition, a high specific surface area can further improve electron and ion transport rates, further enhancing the battery performance.

In an initial compaction process of the electrode sheet, with a gradual increase of compaction density, gas-containing pores of the electrode sheet material of the battery are gradually compressed. Therefore, compressing the pores causes the specific surface area to decrease gradually, and an increase rate of the specific surface area is slow in this stage. When the compaction density increases to a certain threshold, the pores in the electrode sheet of the battery are significantly compressed. At this time, an important change occurs in the compaction process, i.e., a contact area between electrode material particles increases with the increase of compaction density, and then some new contact points are formed, thereby increasing the specific surface area. As the number of contact points increases gradually, the increase rate of specific surface area increases sharply, thereby entering a stage of rapid growth, and finally gradually tending to saturation. This is because an excessively high compaction density also leads to overly tight contact between particles, and the increase rate of new contact area slows down, resulting in a decrease in the growth rate of specific surface area.

Therefore, in the compaction process of the electrode sheet of the battery, there is a stage where the growth rate of specific surface area suddenly accelerates. By finding a threshold of the compaction density corresponding to this stage, the maximum usable compaction density of the electrode sheet of the battery is able to be determined.

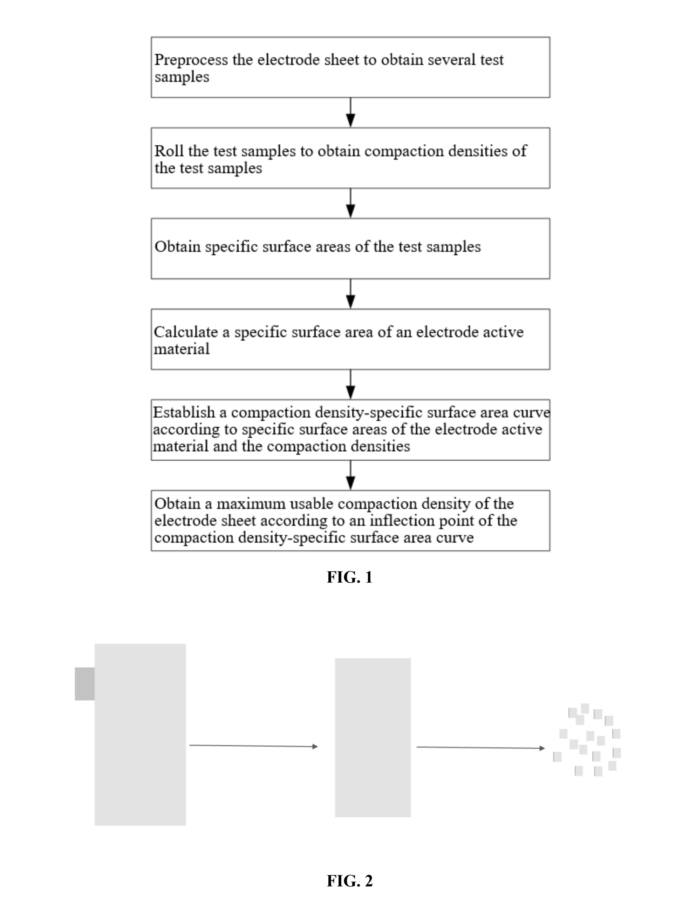

In some embodiments, the method for testing the electrode sheet, as shown in FIG. 1, includes the following steps.

In S1, the electrode sheet is preprocessed to obtain several test samples.

The electrode sheet is disassembled from a battery cell. The electrode sheet can be a positive electrode sheet or a negative electrode sheet, and the electrode sheet includes a current collector and an electrode active material.

When the electrode sheet is the positive electrode sheet, the current collector is aluminum foil, and the electrode active material is at least one selected from the group consisting of $LiMnO_2$, $LiMn_2O_4$, $LiCoO_2$, $LiFePO_4$, $LiNi_xMn_{1-x}O_2$ and $LiNi_xCo_yMn_{1-x-y}O_2$, where $0 < x < 1$ and $0 < y < 1$.

When the electrode sheet is the negative electrode sheet, the current collector is copper foil, and the electrode active material is any one selected from the group consisting of graphite, soft carbon and hard carbon.

As shown in FIG. 2, the electrode sheet to be tested is taken, tabs and wrinkled edges of the electrode sheet are trimmed off, and the electrode sheet is cut into a strip-shaped test electrode sheet with a predetermined length and width, so as to avoid large error(s) in final test results due to large difference(s) between compaction densities of the tabs and wrinkled edges and test results of a middle flat area.

The strip-shaped test electrode sheet is cut into 5 to 15 test samples of approximately the same size.

In S2, the test samples are rolled to obtain compaction densities of the test samples.

The test samples are rolled with a rolling load of 3 tons to 50 tons, so as to obtain samples with different rolled thicknesses.

The compaction density $\rho$ of the test sample is calculated according to Formula (2):

$$\rho=(a+b)/h\ldots\text{Formula (2)}.$$

In Formula (2), h is a thickness value of the test sample, a is an areal density of the current collector, and b is an areal density of the electrode active material.

The areal density a of the current collector satisfies: $3 \text{ mg/cm}^2 \leq a \leq 6 \text{ mg/cm}^2$. It can be understood that a value (unit: $\text{mg/cm}^2$) of a can be any value among 3, 3.5, 4, 4.5, 5, 5.5, 6 or any range value between any two of these values. When the value of a falls within the above range, the electrode sheet is able to be ensured to have an ideal rolled thickness after rolling.

The areal density b of the electrode active material satisfies: $10 \text{ mg/cm}^2 \leq b \leq 50 \text{ mg/cm}^2$. It can be understood that a value (unit: $\text{mg/cm}^2$) of b can be any value among 10, 15, 20, 25, 30, 35, 40, 45, 50 or any range value between any two of these values. When the value of b falls within the above range, the electrode sheet is able to ensure an ideal rolled thickness after rolling, thereby achieving an ideal compaction density.

In S3, specific surface areas of the test samples are obtained.

The specific surface area $S_B$ of the electrode active material is calculated according to Formula (1):

$$S_B=S_A*(a+b)/b\ldots\text{Formula (1)}.$$

In Formula (1), $S_A$ is the specific surface area of the test sample, a is the areal density of the current collector, and b is the areal density of the electrode active material.

Since the areal densities of the current collector and the electrode active material may differ significantly, directly obtaining the compaction density from the specific surface area of the test sample is prone to a large error. The calculation using Formula (1) can eliminate the interference of the current collector material, thereby enabling the comparison of the specific surface area data of electrode sheets made of different materials under different compaction conditions.

In S4, a compaction density-specific surface area curve is established according to the specific surface areas of the electrode active material and the compaction densities.

An X-axis is set according to the compaction density data of the test samples.

A Y-axis is set according to the specific surface area data of the electrode active material.

A Cartesian coordinate system is generated.

The compaction density-specific surface area curve is generated in the Cartesian coordinate system according to the correspondence between the compaction density value of the test sample and the specific surface area value of the electrode active material.

In S5, the maximum usable compaction density of the electrode sheet is obtained according to an inflection point of the compaction density-specific surface area curve.

The inflection point of the compaction density-specific surface area curve is identified.

Tangent lines to curves on two sides of the inflection point are drawn respectively, so that the two tangent lines intersect to form an intersection point.

An X-axis coordinate of the intersection point is identified in the Cartesian coordinate system, so as to determine the maximum usable compaction density of the electrode sheet.

The inflection point of the compaction density-specific surface area curve represents a threshold at which the porosity of the electrode sheet is significantly compressed and the specific surface area enters a stage of rapid increase. By drawing the tangent lines to the curves respectively on the two sides of the inflection point, the intersection point formed can be regarded as the maximum usable compaction density.

The method for testing the electrode sheet provided in the present application is described below with reference to specific examples.

Example 1

In S1, a negative electrode sheet was preprocessed to obtain several test samples.

The negative electrode sheet was disassembled from a battery cell. The electrode sheet includes a negative electrode current collector and a negative electrode active material. The negative electrode current collector was copper foil, and the negative electrode active material was artificial graphite.

The electrode sheet to be tested was taken, tabs and wrinkled edges of the electrode sheet were trimmed off, and the electrode sheet was cut into a strip-shaped test electrode sheet with a predetermined length and width. The strip-shaped test electrode sheet was cut into 7 test samples of 4*4 mm.

In S2, the test samples were rolled to obtain compaction densities of the test samples.

The test samples were rolled using a rolling mill model XDG7-5050C with a rolling load of 5 tons to 45 tons, so as to obtain samples with different rolled thicknesses.

The compaction density $\rho$ of the test sample was calculated according to Formula (2):

$$\rho=(a+b)/h\ldots\text{Formula (2)}.$$

In Formula (2), h is a thickness value of the test sample, a is an areal density of the current collector, and b is an areal density of the electrode active material.

The compaction densities obtained from the tests are shown in Table 1.

Table 1

| Single-side areal density (mg/cm$^2$) | 8.6 | | | | | | |
|---|---|---|---|---|---|---|---|
| Thickness after rolling ($\mu$m) | 124 | 124 | 124 | 124 | 124 | 124 | 124 |
| Compaction density (g/cm$^3$) | 1.45 | 1.50 | 1.55 | 1.60 | 1.65 | 1.70 | 1.75 |
| Double-side areal density (mg/cm$^2$) | 17.13 | | | | | | |
| Thickness after rolling ($\mu$m) | 124 | 124 | 124 | 124 | 124 | 124 | 124 |
| Compaction density (g/cm$^3$) | 1.45 | 1.50 | 1.55 | 1.60 | 1.65 | 1.70 | 1.75 |

In S3, specific surface areas of the test samples were obtained.

The specific surface areas of the test samples were measured with a 3H-2000A instrument from BSD Instrument Technology (Beijing) Co., Ltd, and the specific steps were as follows.

A main valve of a mixed gas cylinder was opened, a pressure reducing valve was adjusted to set an output pressure at 0.34 MPa ± 0.02 MPa, and then a main unit was turned on. A dry and clean sample tube was taken, the sample tube's mass was weighed accurately (precision: 0.0001 g), and the sample tube was filled with a sample, with the sample occupying half of the sample tube's volume. Sample adhering to the tube wall was brushed off with a brush, and the mass was weighed. The sample tube was loaded into the instrument, which was covered with a heating jacket, and a degassing process was performed. A degassing temperature was set to 200°C, and heating was started. Upon reaching the set temperature, this temperature was maintained for 1 hour. After heating was completed, the heating switch was turned off. Once the temperature dropped below 100°C, the heating jacket was removed, and the sample tube was cooled down to room temperature naturally. The sample tube was unloaded, the sample tube's weight was weighed accurately (precision: 0.0001 g), and a net mass of the sample was obtained by subtracting the mass of the empty sample tube. The sample tube was installed in a corresponding position of the instrument. A Dewar flask was filled with liquid nitrogen, an operating software was opened, the sample mass was input, and a test file was saved. After the analysis was completed, a graph was analyzed, and the specific surface area value $S_A$ was automatically calculated.

The specific surface area $S_B$ of the electrode active material was calculated according to Formula (1):

$$S_B=S_A*(a+b)/b\ldots\text{Formula (1)}.$$

In Formula (1), $S_A$ is the specific surface area of the test sample, a is the areal density of the current collector, and b is the areal density of the electrode active material.

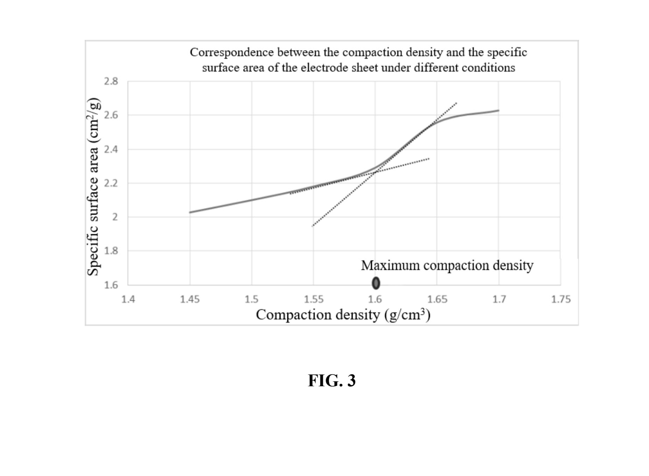

In S4, a compaction density-specific surface area curve was established according to the specific surface areas of the electrode active material and the compaction densities, as shown in FIG. 3.

An X-axis was set according to the compaction density data of the test samples.

A Y-axis was set according to the specific surface area data of the electrode active material.

A Cartesian coordinate system was generated.

The compaction density-specific surface area curve was generated in the Cartesian coordinate system according to the correspondence between the compaction density value of the test sample and the specific surface area value of the electrode active material.

In S5, the maximum usable compaction density of the electrode sheet was obtained according to an inflection point of the compaction density-specific surface area curve.

The inflection point of the compaction density-specific surface area curve was identified.

Tangent lines to curves on two sides of the inflection point were drawn respectively, so that the two tangent lines intersect to form an intersection point.

An X-axis coordinate of the intersection point was identified in the Cartesian coordinate system, so as to determine the maximum usable compaction density of the electrode sheet.

Beneficial effects of the present application are as follows. A precise method for testing the maximum compaction density of the electrode sheet of lithium-ion battery materials is provided. The method includes: obtaining the electrode sheet; preprocessing the electrode sheet to obtain several test samples; rolling the test samples to obtain the compaction densities of the test samples; obtaining the specific surface areas of the test samples; calculating the specific surface areas of the electrode active material according to the specific surface areas of the test samples; establishing the compaction density-specific surface area curve; and obtaining the maximum usable compaction density of the electrode sheet according to the inflection point of the compaction density-specific surface area curve. By testing the thicknesses of several test samples respectively to calculate the compaction densities and form the data curve, the error caused by directly using the average value of the thicknesses for calculation is avoided. Specific surface area data of the electrode sheet can be accurately measured by the instrument and equipment, with simple operation and stable and reliable results. By establishing the compaction density-specific surface area curve, the maximum usable compaction density of the electrode sheet is able to be obtained intuitively and accurately, which effectively avoids serious consequences such as misjudgment of material performance caused by human factors in liquid absorption test errors, thereby ensuring that the discharge capacity of the battery is able to be improved without sacrificing wetting and liquid retention performances of the electrode sheet.

The method for testing the maximum usable compaction density of the electrode sheet provided in the embodiments of the present application is described in detail above. Specific examples are used in the present application to illustrate the principles and implementations of the present application. The descriptions of the above embodiments are only intended to help understand the technical solutions and core ideas of the present application. Those skilled in the art should understand that they can still modify the technical solutions recorded in the above embodiments, or equivalently replace some of the technical features. Such modifications or replacements do not make the essence of the corresponding technical solutions depart from the scope of the technical solutions of the embodiments of the present application.

**Claims**

1. A method for testing an electrode sheet, **characterized by** comprising following steps:

   preprocessing the electrode sheet to obtain several test samples;
   rolling the test samples to obtain compaction densities of the test samples;
   obtaining specific surface areas of the test samples;
   calculating a specific surface area $S_B$ of an electrode active material according to Formula (1):

   $$S_B = S_A * (a+b)/b \quad \text{Formula (1);}$$

   where in Formula (1), $S_A$ is a specific surface area of the test sample, a is an areal density of a current collector of the electrode sheet, and b is an areal density of the electrode active material of the electrode sheet;
   establishing a compaction density-specific surface area curve according to specific surface areas of the electrode active material and the compaction densities; and
   obtaining a maximum usable compaction density of the electrode sheet according to an inflection point of the compaction density-specific surface area curve.

2. The method for testing the electrode sheet as claimed in claim 1, wherein the step of obtaining the compaction densities of the test samples comprises:

   measuring thickness values of the rolled test samples; and
   calculating a compaction density $\rho$ of the test sample according to Formula (2):

   $$\rho = (a+b)/h \quad \text{Formula (2);}$$

   where in Formula (2), h is the thickness of the test sample.

3. The method for testing the electrode sheet as claimed in claim 1, wherein a rolling load is in a range of 3 tons to 50 tons.

4. The method for testing the electrode sheet as claimed in claim 1, wherein the areal density a of the current collector of the electrode sheet satisfies: $3 \text{ mg/cm}^2 \leq a \leq 6 \text{ mg/cm}^2$.

5. The method for testing the electrode sheet as claimed in claim 1 or 4, wherein the areal density b of the electrode active material of the electrode sheet satisfies: $10 \text{ mg/cm}^2 \leq b \leq 50 \text{ mg/cm}^2$.

6. The method for testing the electrode sheet as claimed in claim 1, wherein the step of preprocessing the electrode sheet comprises:

   trimming off tabs and wrinkled edges of the electrode sheet; and
   cutting the electrode sheet into 5 to 15 test samples of approximately same size.

7. The method for testing the electrode sheet as claimed in claim 1, wherein the step of establishing the compaction density-specific surface area curve according to the specific surface areas of the electrode active material and the compaction densities comprises:

   setting an X-axis according to compaction density data of the test samples;
   setting a Y-axis according to specific surface area data of the electrode active material; and
   generating a Cartesian coordinate system, and generating the compaction density-specific surface area curve in the Cartesian coordinate system according to a correspondence between a compaction density value of the test sample and a specific surface area value of the electrode active material.

8. The method for testing the electrode sheet as claimed in claim 7, wherein the step of obtaining the maximum usable compaction density of the electrode sheet according to the inflection point of the compaction density-specific surface area curve comprises:

   identifying the inflection point of the compaction density-specific surface area curve;
   drawing tangent lines to curves on two sides of the inflection point respectively, so that the two tangent lines intersect to form an intersection point; and
   identifying an X-axis coordinate of the intersection point in the Cartesian coordinate system, so as to determine the maximum usable compaction density of the electrode sheet.

9. The method for testing the electrode sheet as claimed in claim 1, wherein a method for testing the specific surface area of the test sample is a nitrogen adsorption continuous flow method or a vacuum static volumetric method.

10. The method for testing the electrode sheet as claimed in claim 1, wherein in a case where the electrode sheet is a positive electrode sheet, the current collector of the electrode sheet is aluminum foil, and the electrode active material of the electrode sheet is at least one selected from the group consisting of $LiMnO_2$, $LiMn_2O_4$, $LiCoO_2$, $LiFePO_4$, $LiNi_xMn_{1-x}O_2$ and $LiNi_xCo_yMn_{1-x-y}O_2$, where $0 < x < 1$ and $0 < y < 1$; and
   in a case where the electrode sheet is a negative electrode sheet, the current collector of the electrode sheet is copper foil, and the electrode active material of the electrode sheet is any one selected from the group consisting of graphite, soft carbon and hard carbon.

Preprocess the electrode sheet to obtain several test samples

↓

Roll the test samples to obtain compaction densities of the test samples

↓

Obtain specific surface areas of the test samples

↓

Calculate a specific surface area of an electrode active material

↓

Establish a compaction density-specific surface area curve according to specific surface areas of the electrode active material and the compaction densities

↓

Obtain a maximum usable compaction density of the electrode sheet according to an inflection point of the compaction density-specific surface area curve

**FIG. 1**

**FIG. 2**

Correspondence between the compaction density and the specific surface area of the electrode sheet under different conditions

**FIG. 3**

# EP 4 741 797 A1

## INTERNATIONAL SEARCH REPORT

| | International application No. |
|---|---|
| | **PCT/CN2024/093435** |

| **A.** | **CLASSIFICATION OF SUBJECT MATTER** |
|---|---|

G01N9/00(2006.01)i

According to International Patent Classification (IPC) or to both national classification and IPC

| **B.** | **FIELDS SEARCHED** |
|---|---|

Minimum documentation searched (classification system followed by classification symbols)

IPC:G01N

Documentation searched other than minimum documentation to the extent that such documents are included in the fields searched

Electronic data base consulted during the international search (name of data base and, where practicable, search terms used)

CNTXT: CNKI; ENTXTC; DWPI: 电池, 极片, 正极, 负极, 比表面积, 压实密度, 孔隙率, battery, pole, positive, negative, specific surface area, density, porosity

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 116735421 A (SVOLT ENERGY TECHNOLOGY CO., LTD.) 12 September 2023 (2023-09-12)<br>description, paragraphs [0005]-[0035] | 1-10 |
| Y | CN 111337842 A (DONGGUAN WEKEN BATTERY CO., LTD.) 26 June 2020 (2020-06-26)<br>description, paragraphs [0006]-[0044], and figure 3 | 1-10 |
| Y | CN 108844878 A (CONTEMPORARY AMPEREX TECHNOLOGY CO., LTD.) 20 November 2018 (2018-11-20)<br>description, paragraphs [0005]-[0027] | 1-10 |
| A | CN 107655791 A (GANZHOU RUIFUTE TECHNOLOGY CO., LTD.) 02 February 2018 (2018-02-02)<br>entire document | 1-10 |
| A | CN 108709825 A (HEFEI GUOXUAN HIGH-TECH POWER ENERGY CO., LTD.) 26 October 2018 (2018-10-26)<br>entire document | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 June 2024** | **02 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

11

**INTERNATIONAL SEARCH REPORT**

| International application No. |
| --- |
| **PCT/CN2024/093435** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111122627 A (DONGGUAN VEKEN BATTERY CO., LTD. et al.) 08 May 2020 (2020-05-08) entire document | 1-10 |
| A | US 2018342727 A1 (LG CHEM, LTD.) 29 November 2018 (2018-11-29) entire document | 1-10 |

Form PCT/ISA/210 (second sheet) (July 2022)

## INTERNATIONAL SEARCH REPORT
### Information on patent family members

International application No.

**PCT/CN2024/093435**

| Patent document cited in search report | | | Publication date (day/month/year) | Patent family member(s) | | | Publication date (day/month/year) |
|---|---|---|---|---|---|---|---|
| CN | 116735421 | A | 12 September 2023 | None | | | |
| CN | 111337842 | A | 26 June 2020 | None | | | |
| CN | 108844878 | A | 20 November 2018 | EP | 3573149 | A1 | 27 November 2019 |
| | | | | EP | 3573149 | B1 | 21 September 2022 |
| | | | | US | 2019363344 | A1 | 28 November 2019 |
| | | | | US | 11283061 | B2 | 22 March 2022 |
| CN | 107655791 | A | 02 February 2018 | None | | | |
| CN | 108709825 | A | 26 October 2018 | CN | 108709825 | B | 08 January 2021 |
| CN | 111122627 | A | 08 May 2020 | None | | | |
| US | 2018342727 | A1 | 29 November 2018 | US | 10601026 | B2 | 24 March 2020 |
| | | | | EP | 3301743 | A1 | 04 April 2018 |
| | | | | EP | 3301743 | B1 | 10 April 2019 |
| | | | | KR | 20170095735 | A | 23 August 2017 |
| | | | | KR | 101950859 | B1 | 22 February 2019 |
| | | | | CN | 107851778 | A | 27 March 2018 |
| | | | | CN | 107851778 | B | 09 October 2020 |
| | | | | WO | 2017142261 | A1 | 24 August 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310810909